# EUROPÄISCHE PATENTANMELDUNG

(11) **EP 1 096 344 A1**
(43) Veröffentlichungstag der Anmeldung: **02.05.2001**
(21) Anmeldenummer: 99121629.2
(22) Anmeldetag: 30.10.1999
(51) Int. Cl.: G05B 19/042

(54) **Verfahren und Vorrichtung zur einheitlichen Ansteuerung von Endgeräten**

(71) Anmelder: TLC Transport-, Informatik- u. Logistik-Consulting GmbH, 10179 Berlin (DE)
(72) Erfinder: Dreke, Detlef Dipl.-Informatiker, 63846 Laufach (DE); Strauss, Burkhardt Dipl.-Math., 61267 Neu-Anspach (DE)
(74) Vertreter: Stenger, Watzke & Ring Patentanwälte

(57) **Zusammenfassung**

Um Endgeräte (2) verschiedenster Art und Hersteller untereinander nahezu beliebig austauschbar und einheitlich ansteuerbar zu machen, insbesondere so, daß ein in sich konsistenter Daten- bzw. Informationsaustausch zwischen verschiedenen Bahnhofsanlagen und dergleichen ermöglicht wird, wird mit der vorliegenden Erfindung ein Verfahren zur einheitlichen Ansteuerung von Endgeräten (2), insbesondere von vorzugsweise im Bereich von Bahnhofsanlagen einsetzbaren optischen und/oder akustischen Informationsanlagen, umfassend Monitore, Kameras, Lautsprecher, Fallblattanzeiger, Sensorik- und/oder Aktroikelementen, und dergleichen, bereitgestellt, wobei seitens wenigstens einer Steuereinrichtung (3, 3') Endgeräte (2) hinsichtlich ihrer logischen Funktionalität mittels eines standardisierten Endgeräte-Adapters (SEA) in Endgeräteklassen zusammengefaßt, über eine standardisierte Endgeräteschnittstelle (SES) mit einem Endgeräte-Controller (EC) verbunden und von dem Endgeräte-Controller (EC) physikalisch angesteuert werden.

## Beschreibung

Die vorliegende Erfindung betrifft ein Verfahren und eine Vorrichtung zur einheitlichen Ansteuerung von Endgeräten, insbesondere von vorzugsweise im Bereich von Bahnhofsanlagen einsetzbaren optischen und/oder akustischen Informationsanlagen, umfassend Monitore, Kameras, Lautsprecher, Fallblattanzeiger, Sensorik- und/oder Aktorikelementen, und dergleichen.

Bei gegebenen Infrastrukturen ist es derzeit der Normalfall, daß eine Vielzahl von Sensorik- und/oder Aktorikelementen einer Vielzahl von funktionsorientierten Vorrichtungen zugeordnet sind, wozu Beleuchtungssysteme gehören, Klima- Belüftungssysteme, Schattierungseinheiten, Heizungssysteme, Kommunikationssysteme umfassend Überwachungskameras, Monitore, Notrufsysteme und Lautsprecher, Wasserführungs- und Pumpsysteme und dergleichen. Dabei ist es auch geläufig, daß nicht nur die jeweiligen Geräte selbst, sondern auch die dazugehörigen Sensorik- und/oder Aktorikelemente aus unterschiedlichen Beschaffungszeiträumen stammen, unterschiedlichen Generationen zugehören und über unterschiedlichste Schnittstellen und Ansprechverfahren verfügen.

Ein besonderer Anwendungsfall der vorliegenden Erfindung ist beispielsweise im Bereich von Bahnhofsanlagen gegeben, wo zur Information der Fahrgäste unterschiedliche optische und/oder akustische Informationsanlagen eingesetzt werden, wobei Endgeräte, wie Monitore, Lautsprecher, Fallblattanzeiger, Videotafeln und dergleichen, seitens dafür vorgesehener Steuereinrichtungen mit den entsprechenden Informationen versorgt und angesteuert werden.

Die Deutsche Bahn beispielsweise setzt in ihren Bahnhöfen derzeit noch Fahrgastinformationsanlagen (FIA) unterschiedlichster Hersteller ein, so daß nahezu jeder Bahnhof hinsichtlich der zum Einsatz kommenden Fahrgastinformationsanlagen einzigartig ist. Gleiches gilt für die in den Bahnhöfen zur Ansteuerung der Fahrgastinformationsanlagen und deren Endgeräte vorhandenen Steuereinrichtungen, die verschiedene Rechnersysteme und -netze umfassen und grundsätzlich den lokalen Gegebenheiten eines Bahnhofs angepaßt sind. Aufgrund dieser Umstände sind ein Austausch und die Versorgung mit Daten zur Fahr- bzw. Reisegastinformation zwischen einzelnen Bahnhöfen in der Regel inkonsistent. Die hierbei zur Fahrgastinformation interessierenden Daten umfassen beispielsweise Fahrplandaten hinsichtlich Soll-, Ist- und Prognosedaten, die den Fahrgast beispielsweise hinsichtlich Zuglauf, Verspätung, Anschlußsituation und dergleichen informieren.

Standardisierungs- und Integrationsbestrebungen hinsichtlich einer Ansteuerung der in Bahnhofsanlagen eingesetzten Endgeräte von Informationsanlagen sind bisher gescheitert, da zum einen in Bahnhofsanlagen die Schnittstellen zwischen den Steuereinrichtungen und den angeschlossenen Endgeräten der Informationsanlagen nur proprietär zugänglich sind und zum anderen ein Austauschen der Informationsanlagen aus Kostengründen ausgeschlossen ist. So kann es mitunter vorkommen, daß ältere Endgeräte, die in Bahnhofsanlagen noch vorhanden sind, an neuere Steuereinrichtungen angeschlossen werden müssen. Problematisch ist dabei, daß in der Regel die Dokumentationen dieser Endgeräte aufgrund deren Alters nicht mehr vorhanden sind und daher die Ansteuerung zur Integration dieser Endgeräte erschwert und teilweise ganz unmöglich ist.

In Anbetracht dieses Standes der Technik liegt der vorliegenden Erfindung die **Aufgabe** zugrunde, ein Verfahren zur Ansteuerung von Endgeräten der eingangs genannten Art bereitzustellen, welches Endgeräte verschiedenster Art und Hersteller untereinander nahezu beliebig austauschbar und einheitlich ansteuerbar macht, insbesondere so, daß ein in sich konsistenter und einfach veränderbarer Daten- bzw. Informationsaustausch zwischen verschiedenen Informationsanlagen und Endgeräten ermöglicht wird.

Die Aufgabe wird erfindungsgemäß **gelöst** durch ein Verfahren zur einheitlichen Ansteuerung von Endgeräten, insbesondere von vorzugsweise im Bereich von Bahnhofsanlagen einsetzbaren optischen und/oder akustischen Informationsanlagen, umfassend Monitore, Kameras, Lautsprecher, Fallblattanzeiger, Sensorik- und/oder Aktorikelemente, und dergleichen, wobei seitens wenigstens einer Steuereinrichtung Endgeräte hinsichtlich ihrer logischen Funktionalität mittels eines standardisierten Endgeräte-Adapters in Endgeräteklassen zusammengefaßt, über eine standardisierte Endgeräte-Schnittstelle mit einem Endgeräte-Controller verbunden und von dem Endgeräte-Controller physikalisch angesteuert werden.

Erfindungsgemäß werden die anzusteuernden Endgeräte seitens wenigstens einer Steuereinrichtung angesteuert, wobei die Endgeräte vorteilhafterweise in logischen Endgeräteklassen zusammengefaßt werden, beispielsweise in Endgeräte zur Ausgabe einer Zugzeile, sei es akustisch oder optisch, oder in Endgeräte zur Verarbeitung kontinuierlicher Datenströme, beispielsweise Überwachungskameras und Monitore für Videodaten. Seitens der Steuereinrichtung werden die Endgeräte dabei entsprechend der grundsätzlichen logischen Funktionalitäten der jeweiligen Endgeräteklasse angesteuert, d. h. ohne Kenntnis der genauen physikalischen Eigenschaften der einzelnen Endgeräte. Die seitens der Steuereinrichtung gegebenen grundsätzlichen logischen Funktionalitäten und Eigenschaften werden erfindungsgemäß über die eine standardisierte Endgeräte-Schnittstelle dem Endgeräte-Controller zugeführt, welcher schließlich die genauen physikalischen Eigenschaften der Endgeräte gezielt ansteuert. Dadurch sind Endgeräte verschiedenster Art und Hersteller einheitlich ansteuerbar, und damit untereinander nahezu beliebig austauschbar, was insbesondere einen in sich konsistenten Daten- bzw. Informationsaustausch zwischen verschiedenen Informationsanlagen und Endgeräten ermöglicht. Darüber hinaus schafft das erfindungsgemäße Verfahren so einen neuen Standart, der vorteilhafterweise auch für zukünftige Neuentwicklungen im Bereich der Endgeräte verwendbar ist, so daß Neuentwicklungen problemlos von bestehenden Informationsanlagen adaptierbar sind.

Vorteilhafterweise wird der standardisierte Endgeräte-Adapter mit dem Endgeräte-Controller über die standardisierte Endgeräte-Schnittstelle bidirektional verbunden, in einer besonders bevorzugten Ausgestaltung unidirektional. Dadurch ist es möglich, seitens einer Steuereinrichtung mehrere Endgeräte über den jeweiligen Endgeräte-Controller anzusprechen, beispielsweise um über mehrere verteilte Lautsprecher oder Lautsprecheranlagen eine Gleisansage durchzugeben. Dabei kann sowohl eine natürliche Ansage, als auch eine synthetische Ansage über die Lautsprecher ausgegeben werden, die sich aus unterschiedlichen gespeicherten Teilansagen zusammensetzt.

In einer weiteren vorteilhaften Ausgestaltung der Erfindung wird zur Kommunikation zwischen dem standardisierten Endgeräte-Adapter und der Steuereinrichtung ein zur Übertragung von Text-, Audio- und/oder Videodaten geeignetes Protokoll verwendet, vorzugsweise ein Multimedia-Kommunikations-Protokoll, beispielsweise H.323 unter Verwendung von TCP/IP (Transmission Control Protocol/Internet Protocol). Dabei werden vorteilhafterweise Text-, Audio- und/oder Videodaten zwischen der Steuereinrichtung und dem Endgeräte-Controller über die standardisierte Endgeräte-Schnittstelle übertragen. In einer weiteren vorteilhaften Ausgestaltung der Erfindung werden die Daten kodiert übertragen, wobei die Kodierung vorzugsweise im G.7xx-Format für digital kodierte akustische Signale und im H. 26x-Format für kodierte Bildinformationen erfolgt. Dabei sind unterschiedliche Qualitäten der kodierten Signale hinsichtlich Bandbreite, Auflösung und dergleichen veränderlich gehalten.

Das H.323-Format ist eine Empfehlung der International Telecommunications Union (ITU) und setzt die Standards für die Multimedia-Kommunikation über lokale Netzwerke (LAN), Unternehmensnetzwerken (Enterprise Net Works/EN), urbanen Netzwerken (Metropolitan Area Networks, MAN) und Weitverkehrsnetzwerken (Wide Area Networks, WAN). Darüber hinaus ist eine Mulitmedia-Kommunikation für das Internet auf Basis des H.323-Formates nutzbar. Das standardisierte H.323-Format liefert eine Plattform für die Übertragung von Text-, Audio- und/oder Videodaten über sogenannte paketvermittelte Netzwerke, wie beispielsweise IP (Internet Protocol) oder IPX (Internet Packet Exchange). Dabei können Endgeräte und softwaretechnische Anwendungen aus dem Mulitmedia-Bereich der verschiedensten Hersteller über diesen Standard angesprochen werden und miteinander interagieren. Die Verwendung des H.323-Formates erlaubt eine Kommunikation ohne sich um Kompatibilität der verschiedenen Endgeräte bzw. Anwendungen kümmern zu müssen. Das H.323-Format ist dabei äußert flexibel hinsichtlich Kombinationsmöglichkeiten verschiedener Kommunikationstypen. So kann neben einer reinen Telefonie über IP, Voice-over IP genannt, auch Bildtelefonie, gleichzeitige Audio- und Datenkommunikation, sowie gleichzeitige Audio-, Video- und Datenkommunikation angewendet werden. Das H.323-Format ist baukastenmäßig konzipiert. Dabei werden zahlreiche bereits vorgefertigte und in der Praxis bewährte Kommunikations-Protokolle eingesetzt. Für die von Audio- und/oder Videoanwendungen benötigte Echtzeitfähigkeit verfügt das H.323-Format beispielsweise über Module, die das Realtime-Protocol (RTP) und das Realtime-Control-Protocol (RTCP) verwenden. Für einen Verbindungsauf- und abbau steht beispielsweise das für ISDN-Dienste eingesetzte Q.932-Protokoll im H.323-Format zur Verfügung. Für eine Datenkommunikation beispielsweise Module der Protokollfamilie T.120.

In einer weiteren vorteilhaften Ausgestaltung der Erfindung werden zur optischen Informationsdarstellung über Endgeräte wie Monitore oder Fallblattanzeiger wesentliche Funktionen wie Löschen wenigstens eines Teils einer Anzeige, Aufschalten, Ändern bzw. Ergänzen von Informationen oder Teilinformationen, setzen und/oder abfragen von aktuellen Informationen bzw. Teilinformationen, abfragen hinsichtlich des Endgerätestatus sowie abfragen hinsichtlich einer Fehlerdiagnose verwendet. Darüber hinaus sind in vorteilhafter Weise seitens der Steuereinrichtung Zustandsänderungen erfaßbar sowie Fernwartungsmaßnahmen einleit- bzw. durchführbar. Diese Funktionen werden erfindungsgemäß seitens der Steuereinrichtung aufgerufen. Die Kommunikation zwischen der Steuereinrichtung und dem Endgeräte-Controller erfolgt über Nachrichten auf logischer Ebene, die über die physikalischen Eigenschaften des jeweiligen Endgerätes keine Kenntnis benötigen. Meldungen können dabei seitens des Endgeräte-Controllers selbständig zur Steuereinrichtung gesendet werden. Dabei werden über den standardisierten Endgeräte-Adapter die auszutauschenden Nachrichten bzw. Daten in Form von Telegrammen in endgerätespezifische Steuerbefehle (Basis-Kommandos) für den Endgeräte-Controller umgesetzt. Das erfindungsgemäße Verfahren schafft somit durch die logische Ansteuerung von Endgeräten seitens einer Steuereinrichtung nicht nur eine Vereinfachung der Ansteuerung sondern zusätzlich auch eine Vereinheitlichung der Betriebsfähigkeit verschiedener Endgeräte. So können beispielsweise endgeräteseitig ausgelöste Fehlermeldungen zwar einen gleichen logischen Namen tragen, jedoch in Abhängigkeit des jeweiligen Endgerätes unterschiedliche Bedeutungen haben. So kann beispielsweise die Fehlermeldung "XYZ" des Endgerätes A bedeuten "Papier alle", während die gleiche Fehlermeldung bei Endgerät B bedeutet "Geldkassette voll". Das erfindungsgemäße Verfahren entschlüsselt die endgeräteseitig vorhandenen Meldungen in vereinheitlichte logische Fehlermeldungen seitens der Steuereinrichtung.

Zur akustischen Informationsdarstellung an Endgeräten wie Anlagen zur Ausgabe von Festtexten, Lautsprecheranlagen mit Audio-Ankopplung oder Lautsprechern, werden vorteilhafterweise die jeweiligen Lautsprecherkreise seitens des Endgeräte-Controllers angesteuert, um den anzusagenden Text auszulösen. Bei Anlagen mit Audio-Ankopplung werden dabei die anzusagenden Texte vorteilhafterweise dynamisch über ein im Bereich der Informationsanlage vorhandenes Netzwerk übertragen bzw. von diesem weitergeleitet. Die Ansteuerung der Lautsprecherkreise erfolgt dabei durch den jeweiligen Endgeräte-Controller. Die auszugebenden Audiosignale werden vorteilhafterweise von einer auf den standardisierten Endgeräte-Adapter vorhandenen Audio-Schnittstelle über den Endgeräte-Controller in das jeweilige Endgerät eingespeist. Sofern an einem Endgerät mehr als ein Dienst zur akustischen Informationsdarstellung zur Verfügung steht, wird vorteilhafterweise ein gemeinsamer Endgeräte-Controller zur Steuerung dieser Dienste von zwei voneinander getrennten standardisierten Endgeräte-Adaptern logisch angesteuert.

Vorrichtungsseitig wird die Aufgabe **gelöst** durch eine gattungsgemäße Vorrichtung zur einheitlichen Ansteuerung von Endgeräten, welche aus einem Endgeräte-Controller zur physikalischen Steuerung unterschiedlicher Endgeräte und einem standardisierten Endgeräte-Adapter zur logischen Steuerung der Endgeräte seitens wenigstens einer Steuereinrichtung besteht, wobei der Endgeräte-Controller und der standardisierte Endgeräte-Adapter über eine standardisierte Endgeräte-Schnittstelle miteinander verbunden sind.

Gemäß einer vorteilhaften Ausgestaltung der Erfindung sind der Endgeräte-Controller und der standardisierte Endgeräte-Adapter als voneinander räumlich getrennte Baugruppen ausgebildet, so daß der Endgeräte-Controller seitens eines Endgerätes und der standardisierte Endgeräte-Adapter seitens einer Steuereinrichtung integrierbar und über die standardisierte Endgeräte-Schnittstelle miteinander verbindbar sind. Die räumliche Trennung des Endgeräte-Controllers und des standardisierten Endgeräte-Adapters ermöglicht dabei die Verwendung der vor Ort vorhandenen Infrastruktur hinsichtlich der bereits vorhandenen Verkabelung und insbesondere bei Endgeräten und Steuereinrichtungen, deren Raumangebot zur Aufnahme weiterer Baugruppen-Komponenten begrenzt ist, die Verwendung der erfindungsgemäßen Vorrichtung. Die erfindungsgemäße Vorrichtung ermöglicht so in vorteilhafter Weise eine Entflechtung der Komplexität der Ansteuerung. Die bereits vorhandene Infrastruktur, in der Regel in Form von Klingeldrahtleitungen, wäre nicht geeignet, eine verfahrensgemäße Ansteuerung zu ermöglichen, insbesondere da die Übertragungsbandbreite der Klingeldrahtleitungen äußerst beschränkt ist. Durch das erfindungsgemäße Verfahren müssen zur einheitlichen Ansteuerung der Endgeräte über die gegebenenfalls vorhandenen Klingeldrahtleitungen lediglich die physikalischen Steuersignale für die Endgeräte übertragen werden, so daß die zur Verfügung stehende Übertragungsbandbreite der Klingeldrahtleitungen ausreichend ist. Vorteilhafterweise weisen dabei sowohl der Endgeräte-Controller als auch der standardisierte Endgeräte-Adapter eine standardisierte Endgeräte-Schnittstelle auf.

Gemäß einer weiteren vorteilhaften Ausgestaltung der Erfindung ist die standardisierte Endgeräte-Schnittstelle als Interprozeß-Schnittstelle ausgebildet, vorzugsweise als Berkley Socket. Vorteilhafterweise weist die standardisierte Endgeräte-Schnittstelle Schnittstellen zur Anbindung an ein Kommunikationsnetzwerk auf, vorzugsweise ein Application Programming Interface (API), eine LONWorks, eine RS232, eine RS485, eine V.24, oder dergleichen, beispielsweise ein Schnittstelle zur Anbindung an ein Funk-LAN. Durch die Möglichkeit der Anbindung an diese Bus-Systeme wird die weitere Nutzung der bereits im Bereich von Bahnhofsanlagen vorhandenen Verkabelung installierter Endgeräte von Informationsanlagen ermöglicht. Bevorzugte Übertragungsmedien sind dabei Ethernet-fähige und damit beispielsweise TCP/IP-fähige Übertragungsmedien wie twisted pair, vorzugsweise der Kategorie 5/6, oder Koaxialleitungen, Funk-LANs und dergleichen. Vorteilhafterweise ist die Verbindung zwischen dem standardisierten Endgeräte-Adapter und einer Steuereinrichtung, beispielsweise ein als Server arbeitender Rechner, eine auf dem H.323-Format basierende Verbindung, über die der standardisierte Endgeräte-Adapter von der Steuereinrichtung erhaltende Informationen zur Fahrgastinformation, beispielsweise Zugverspätungen, Fahrgleisansagen, An- und Abfahrtzeitänderungen, Anschlußmöglichkeiten und dergleichen erhält und in entsprechende logische Ansteuerungen für die Endgeräte umsetzt, beispielsweise in mit G. 7xx kodierte akustische Sprachsignale oder mit H. 26x kodierte Videosignale wie Bewegtbilder und dergleichen.

Weitere Einzelheiten, Merkmale und Vorteile der Erfindung werden nachfolgend anhand der in den Figuren dargestellten Ausführungsbeispiele näher erläutert. Dabei zeigen:
- Fig. 1: den prinzipiellen Aufbau einer erfindungsgemäßen Vorrichtung;
- Fig. 2: die prinzipielle Funktion einer erfindungsgemäßen Vorrichtung;
- Fig. 3a: den prinzipiellen Aufbau einer ersten Ausführungsform der erfindungsgemäßen Vorrichtung;
- Fig. 3b: den prinzipiellen Aufbau einer weiteren Ausführungsform der erfindungsgemäßen Vorrichtung;
- Fig. 3c: den prinzipiellen Ablauf der Kommunikation einer Vorrichtung gemäß Fig. 3a;
- Fig. 3d: den prinzipiellen Ablauf der Kommunikation einer Vorrichtung gemäß Fig. 3b;
- Fig. 4: in einem Blockdiagramm die prinzipielle Funktionalität der erfindungsgemäßen Vorrichtung;
- Fig. 5: in einem Blockdiagramm die Funktionalität der erfindungsgemäßen Vorrichtung im Detail;
- Fig. 6: in einem Blockdiagramm die prinzipielle Funktionsweise des standardisierten Endgeräte-Adapters der erfindungsgemäßen Vorrichtung;
- Fig. 7a: in einem Blockdiagramm die prinzipielle Funktionsweise des Endgeräte-Controllers der erfindungsgemäßen Vorrichtung anhand eines Fallblattanzeigers und
- Fig. 7b: in einem Blockdiagramm die prinzipielle Funktionsweise des Endgeräte-Controllers der erfindungsgemäßen Vorrichtung anhand eines Monitors.

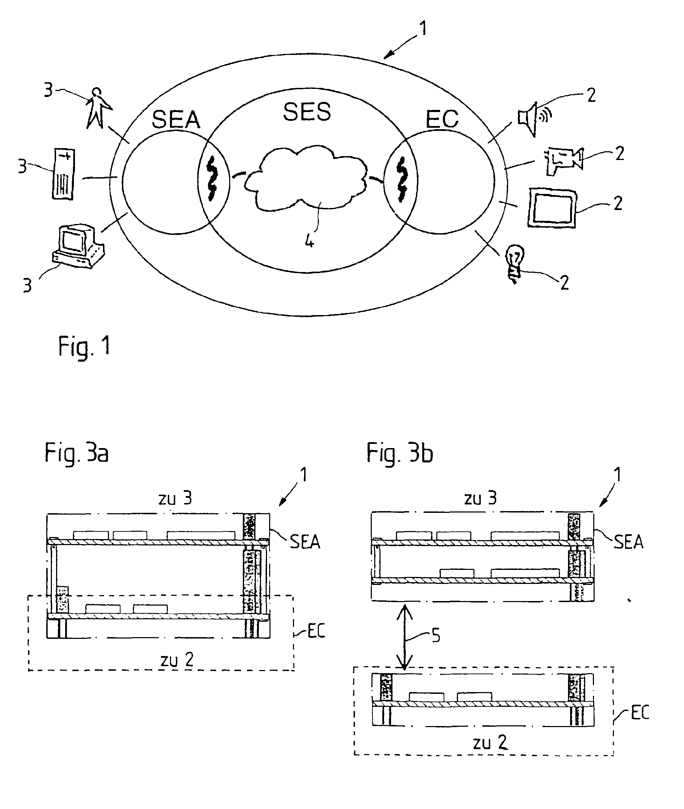

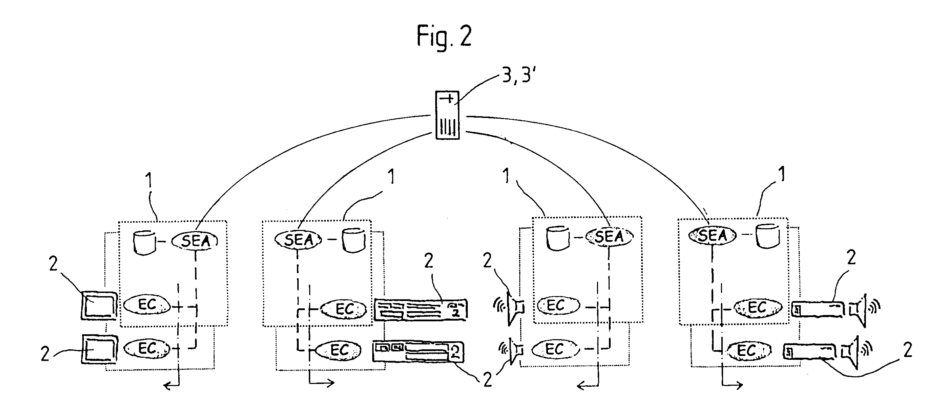

Fig. 1 zeigt den prinzipiellen Aufbau einer Vorrichtung 1 zur einheitlichen Ansteuerung von Endgeräten 2, die im Bereich von Bahnhofsanlagen zur optischen und/oder akustischen Information von Fahrgästen eingesetzt werden. Die Vorrichtung 1 besteht aus einem Endgeräte-Controller EC zur physikalischen Steuerung unterschiedlicher Endgeräte 2 und einem standardisierten Endgeräte-Adapter SEA zur logischen Steuerung der Endgeräte 2 seitens unterschiedlicher Steuereinrichtungen 3, wobei der Endgeräte-Controller EC und der standardisierte Endgeräte-Adapter SEA über eine standardisierte Endgeräte-Schnittstelle SES mittels einer bidirektionalen Kommunikationsverbindung 4 miteinander verbunden sind.

Die Vorrichtung 1 trennt die logische Verarbeitung der seitens der Steuereinrichtung 3 gelieferten Informationen von der endgerätespezifischen Technik. Der standardisierte Endgeräte-Adapter SEA beschreibt die Endgeräte hinsichtlich einer logischen Ansteuerung in der Art und Weise, daß funktional gleiche Endgeräte zu Endgerätefamilien zusammengefaßt werden, beispielsweise akustische Endgeräte 2 bzw. optische Endgeräte 2 von Informationsanlagen in Form von Lautsprechern bzw. Videomonitoren oder Fallblattanzeigern, wie in Fig. 2 dargestellt. Die physikalische Steuerung der Endgeräte 2 erfolgt dabei ausschließlich seitens des Endgeräte-Controllers EC. Der standardisierte Endgeräte-Adapter SEA und der Endgeräte-Controller EC sind über die standardisierte Endgeräte-Schnittstelle SES miteinander bidirektional verbunden, welche als API ausgebildet ist oder andere physikalische Übertragungsmedien, wie V.24, LONWorks, RS485 oder RS232 nutzt. Die standardisierte Endgeräte-Schnittstelle und deren Kommunikationsverbindung 4 gewährleistet dabei eine einheitliche Basis zur Ansteuerung sämtlicher Endgeräte 2 und damit deren Austauschbarkeit untereinander.

Fig. 2 zeigt, wie im Bereich von Bahnhofsanlagen eingesetzte Endgeräte 2 von Informationsanlagen mittels der Vorrichtung 1 seitens einer Steuereinrichtung 3 auf einheitliche und standardisierte Weise ansteuerbar sind. Die Vorrichtung 1 schafft dabei die Trennung einer logischen und standardisierten Ansteuerung durch die Steuereinrichtung 3, hier in Form eines sogenannten Stationsservers 3', von einer physikalischen Endgeräteansteuerung.

Fig. 3a zeigt eine Ausführungsform der Vorrichtung 1, bei der der Endgeräte-Controller EC und der standardisierte Endgeräte-Adapter SEA als eine einheitlich integrierte Baugruppe ausgebildet sind. Fig. 3b zeigt eine Ausführungsform der Vorrichtung 1, bei der der Endgeräte-Controller EC und der standardisierte Endgeräte-Adapter SEA als voneinander räumlich getrennte Baugruppen ausgebildet sind.

Bei der in Fig. 3a dargestellten Vorrichtung erfolgt die Kommunikation zwischen dem Endgeräte-Controller EC und dem standardisierten Endgeräte-Adapter SEA intern über die standardisierte Endgeräte-Schnittstelle SES.

Bei der in Fig. 3b dargestellten Vorrichtung 1 weisen sowohl der Endgeräte-Controller EC als auch der standardisierte Endgeräte-Adapter SEA jeweils eine standardisierte Endgeräte-Schnittstelle SES auf, wobei die Verbindung zwischen dem Endgeräte-Controller EC und dem standardisierten Endgeräte-Adapter über ein Kommunikationsnetzwerk, in der Regel der vorhandenen Infrastruktur, d. h. Klingeldrahtleitungen.

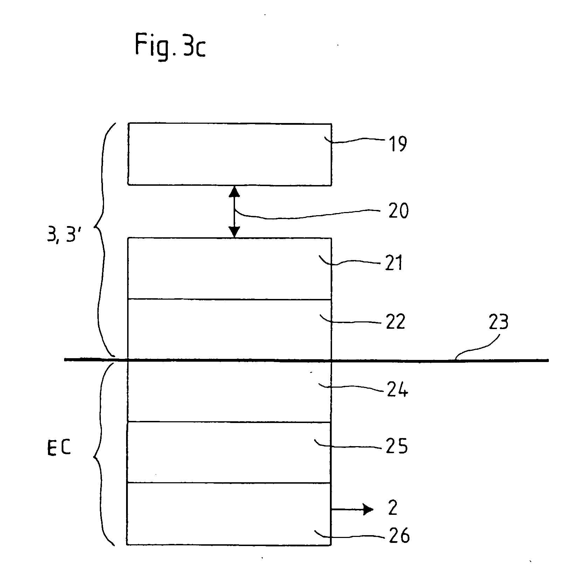

Fig. 3c zeigt den prinzipiellen Kommunikationsablauf einer Ausführungsform der Vorrichtung 1 gemäß Fig. 3a, bei der der Endgeräte-Controller EC und der standardisierte Endgeräte-Adapter SEA als eine einheitlich integrierte Baugruppe ausgebildet sind. Eine auf dem Stationsserver 3, 3' laufende Anwendung 19 zur Ansteuerung eines Endgerätes 2 greift über eine bidirektionale Kommunikationsverbindung 20 auf eine Interprozeß-Schnittstelle 21, vorliegend ein Berkley Socket, zu, welche über den mit 22 gekennzeichneten Treiber Zugriff auf das Bussystem des Servers 3, 3' erhält, vorliegend ein ISA-Bus 23. Auf der Endgeräteseite greift der Endgeräte-Controller EC über einen Treiber 24 auf das Bussystem 24 zu, wobei über eine Verarbeitungslogik 25 die seitens der Anwendung 13 mit dem Endgerät 2 zur Ansteuerung auszutauschenden Informationen den seitens des Engeräte-Controllers EC vorhandenen Ein-/Ausgängen 26, welche seitens des Endgeräte-Controllers EC von der Verarbeitungslogik 25 gesteuert wird, zugeführt werden. Die Ein-/Ausgänge 26 des Endgeräte-Controllers EC sind dabei vorliegend als digitale Ein-/Ausgänge ausgebildet.

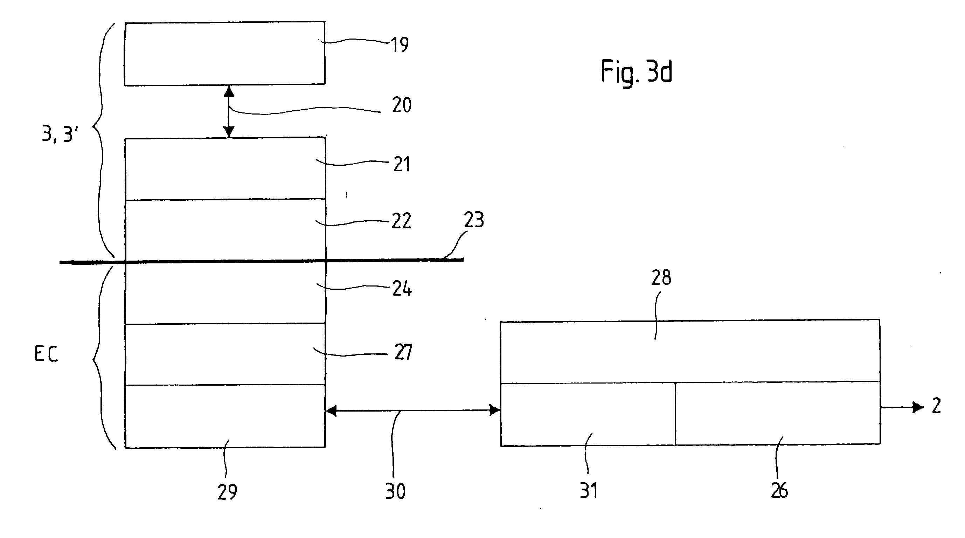

Fig. 3d zeigt den prinzipiellen Funktionsablauf einer Vorrichtung 1 gemäß Fig. 3d, bei der der Endgeräte-Controller EC und der standardisierte Endgeräte-Adapter SEA als voneinander räumlich getrennte Baugruppen ausgebildet sind.

Entsprechend Fig. 3c wird seitens des Stationsservers 3, 3' eine auf dem Stationsserver'3, 3' laufende Anwendung 19 über die serverinterne bidirektionale Kommunikationsverbindung 20 der als Berkley Socket ausgebildeten Interprozeß-Schnittstelle 21 zugeführt, welche über den Treiber 22 auf das Bussystem 23 zugreift. Über den Treiber 24 des Endgeräte-Controller EC kann die Verarbeitungslogik 27 auf das Bussystem 23 zugreifen und so mit der auf dem Stationsserver 3, 3' laufenden Anwendung Daten austauschen. Die Verarbeitungslogik 27 des Endgeräte-Controllers EC wird gemäß Fig. 3d über eine hier nicht dargestellte Schnittstelle mit dem Treiber 29 auf ein Bussystem 30, welches über einen entsprechenden Treiber 31 einer Verarbeitungslogik 28 auf die ein Endgerät 2 ansteuernden Ein- und Ausgänge 26 zugreift. Das Bussystem 30, vorliegend ein LON-Bus ermöglicht so die Benutzung einer bereits vorhandenen Infrastruktur, in der Regel in Form von Klingeldrahtleitungen, über die einen entsprechenden LON-Treiber 29, 31 ansprechenden Schnittstellen seitens der Verarbeitungslogiken 27 bzw. 28.

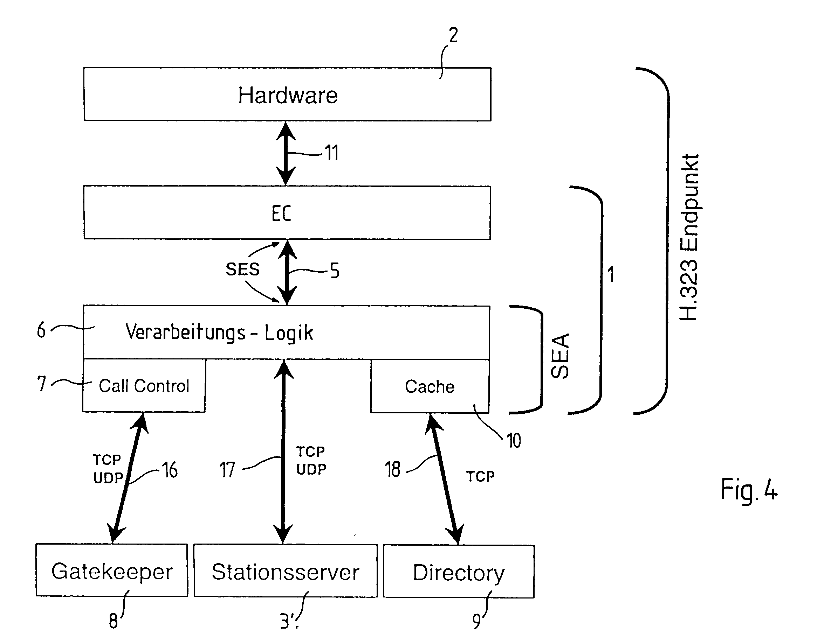

Fig. 4 zeigt in einem Blockdiagramm die prinzipielle Funktionalität der Ansteuervorrichtung 1, bestehend aus dem Endgeräte-Controller EC und der logischen Ansteuerung 6 seitens des standardisierten Endgeräte-Adapters SEA, zwischen denen die standardisierte Endgeräteschnittstelle SES definiert ist. Physikalisch ist die standardisierte Endgeräteschnittstelle SES als Interprozeß-Schnittstelle (Berkley Socket) ausgeführt. Unter der Interprozeß-Schnittstelle ist dabei eine hier nicht dargestellte Adaptionsvorrichtung angeordnet, die für eine verteilte Ansteuervorrichtung 1, entsprechend Fig. 3b bei der der Endgeräte-Controller EC von dem standardisierten Endgeräte-Adapter SEA getrennt ist, ein Kommunikationsnetzwerk 5 ansteuert, vorliegend einen LON-Bus oder eine RS485, die eine Nutzung einer bereits vorhandenen Verkabelung zu bereits installierten Endgeräten erlauben.

Der standardisierte Endgeräte-Adapter SEA realisiert ein einheitliches Verhalten und Layout der unterschiedlichen Endgeräte. Dafür weist der standardisierte Endgeräte-Adapter SEA an seiner Verarbeitungslogik 6 Schnittstellen zu dem Stationsserver 3' auf, welcher die fachlichen Informationen, hier Zugzeilen mit aktuellen Informationen zu ein- und abfahrenden Zügen, liefert. Weiter weist der standardisierte Endgeräte-Adapter SEA ein Modul 7 (Call Control) zur Realisierung eines Verbindungsaufbaus, vorzugsweise im H. 245-Format, auf. Dabei wird eine Verbindung zwischen dem Modul 7 (Call Control) und einem Gatekeeper 8 aufgebaut, welcher festlegt, wie eine Verbindung seitens der Verarbeitungslogik 6 aufgebaut wird und kontrolliert wie das für eine solche Verbindung zur Verfügung stehende Medium benutzt wird, beispielsweise durch Festlegung von Zugriffsprioritäten. Der Gatekeeper 8 bestimmt somit die Qualität der Verbindung, beispielsweise hinsichtlich Übertragungsbandbreiten von digital zu übertragenden akustischen Signalen oder die Auflösung von zu übertragenden Grafiken oder Bewegbildern. So kann beispielsweise im Rahmen einer Überwachung eingesetzte Videokamera zunächst standardmäßig Einzelbilder mit einer geringen Auflösung in vorbestimmten Zeitabständen übertragen und bei Bedarf, beispielsweise bei eintretenden Schadensereignissen Bewegtbilder in hoher Auflösung kontinuierlich übertragen. Der Gatekeeper 8 kontrolliert somit, ähnlich einer im Telekommunikationsbereich eingesetzten digitalen TK-Anlage, ein Anzeigen von hochauflösenden Grafiken mit Bewegtbildübertragungen oder ein digital kodierter Sprechsignale über entsprechende Endgeräte 2 ermöglicht. Dabei wird auf das dynamische Bandbreitenmanagement des H.323-Formates zurückgegriffen. Darüber hinaus ermöglicht das Bandbreitenmanagement des H.323-Formates bei entsprechenden Endgeräten auch die Übertragung von Sprache in unterschiedlichen Qualitäten und die Steuerung von Kameras. Kameras können damit im Betrieb seitens des Steuermoduls 7 (Call Control) über den Gatekeeper 8 umgeschaltet werden auf Einzelbildübertragung, um über die Kamera grobe Bildinformationen zu erhalten und auf Echtzeitbildübertragung, um genauere und gezielte Bildinformationen zu erhalten.

Der standardisierte Endgeräte-Adapter SEA weist darüber hinaus ein Speicher-modul 10 auf, welches in Verbindung mit einem sogenannten Directory-Server 9, vorliegend ein X.500 bzw. LDAP, die entsprechende Adressierung der Endgeräte vornimmt. Der Directroy-Server 9 weist ferner eine Abbildungstabelle auf, die festlegt, wie einzelne anzuzeigende Element, hier die Elemente einer Zugzeile bearbeitet und umgesetzt werden sollen. Für einen Zuganzeiger mit hochauflösender Grafik sind in der Abbildungstabelle des Directory-Servers 9 Logos der Transporteure als Bipmap hinterlegt. Zusätzlich zu der Position des Logos eines Transporteurs auf dem Zuganzeiger kann so über das Speichermodul 10 (Cache) das fachliche Layout der Anzeige der jeweiligen Endgeräte einheitlich für alle Endgeräte verändert werden.

Wie in Fig. 4 dargestellt, werden die Verbindungen zwischen dem standardisierten Endgeräte-Adapter über TCP bzw. UDP hergestellt. Die Verbindung 11 zwischen dem Endgeräte-Controller EC und dem Endgerät 2 ist endgerätespezifisch und seitens des Endgerätes 2 festgelegt. Wie anhand von Fig. 4 zu erkennen, bilden der standardisierte Endgeräte-Adapter SEA, der Endgeräte-Controller EC und das Endgerät 2 einen sogenannten H.323-Endpunkt der im H.323-Format eindeutig festgelegt und definiert ist.

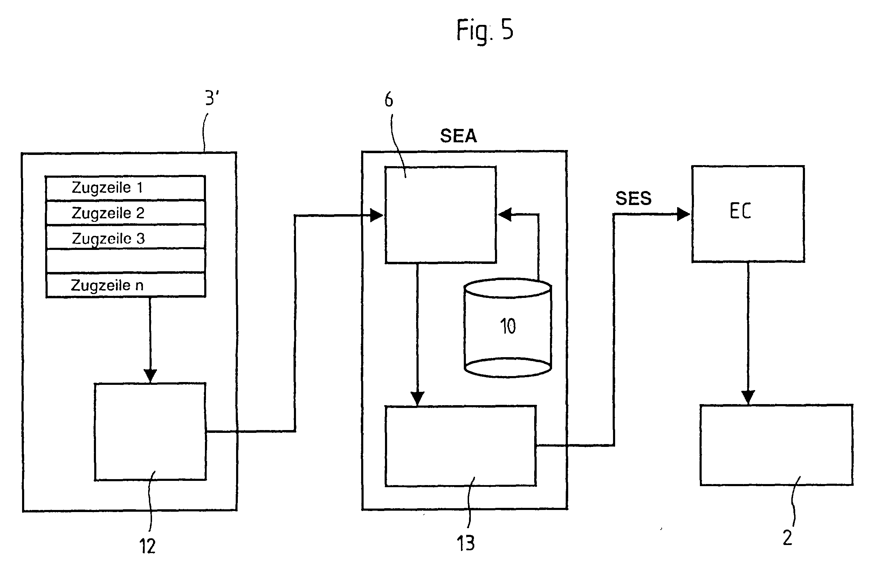

Fig. 5 zeigt, wie seitens des Stationsservers 3' vorhandene Informationen, hier Zugzeilen 1 bis n, über eine Verarbeitungslogik 12 seitens des Stationsservers 3' im H.323-Format aufbereitet und über entsprechende Schnittstellen zur Anzeige, Durchsage, Videoüberwachung, Telefonie, und dergleichen als aufbereiteter Datensatz an den standardisierten Endgeräte-Adapter SEA weitergeleitet werden. Der Stationsserver 3' erhält Zugzeilen über ein Kommunikationsnetz auf Basis des H.323-Formates, welches mit spezifischen Ergänzungen für Bahnhofsanlagen versehen ist, beispielsweise dem von der Deutschen Bahn entwickelten ITB-Format, welches auf H. 323 basiert und anwendungsspezifisch ergänzt ist. Die Zugzeilen sind quasi das Pendant zu den Aushangfahrplänen, d. h. ein Datensatz mit Feldern für Zug-Nummer, -Gattung, Gleis, Ankunfts- und Abfahrtszeit und dergleichen. Aus diesen Zugzeilen generiert der Stationsserver 3' für verschiedene Endgerätefamilien, beispielsweise für optische oder akustische Endgeräte 2, entsprechende Ansteueranweisungen. Dabei wird beispielsweise unterschieden zwischen ein- und mehrzeiligen Anzeigen. Bei einer einzeiligen Anzeige muß ein Konfliktmanagement sicherstellen, daß ein pünktlicher Zug die Anzeige eines stark verspäteten Zuges überschreibt und anschließend die Anzeige wieder herstellt. Zusätzlich muß durch entsprechende Ansagen sichergestellt werden, daß Fahrgäste, die auf den verspäteten Zug warten, nicht versehentlich in den pünktlichen zwischendurch fahrenden Zug einsteigen.

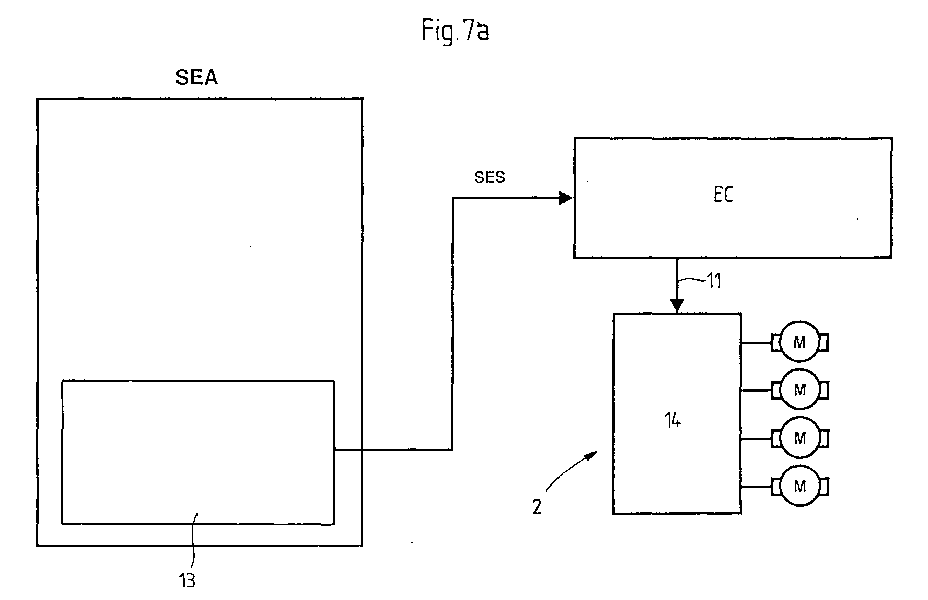

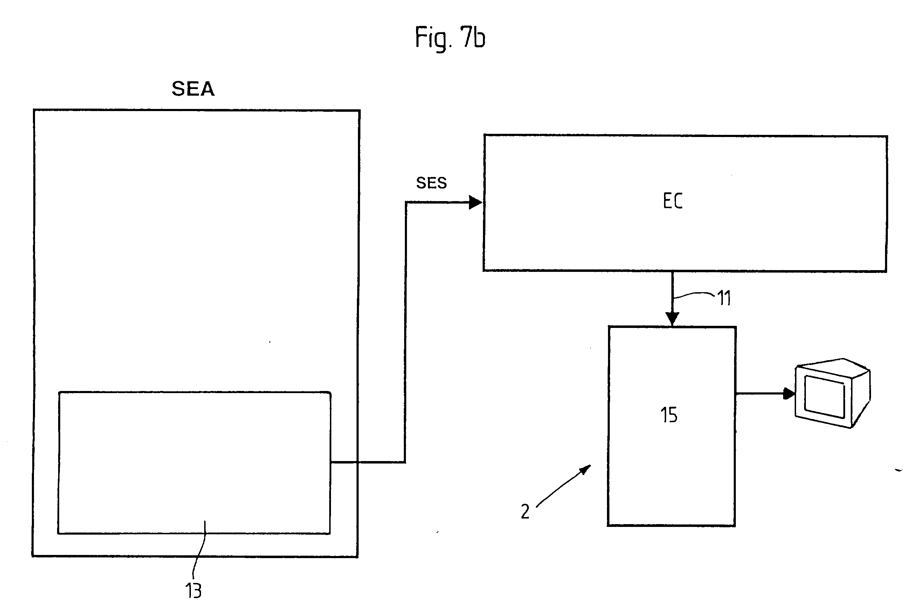

Der standardisierte Endgeräte-Adapter SEA bereitet den vom Stationsserver 3' erhaltenen Datensatz entsprechend der unterschiedlichen Endgeräteklassen wie optische oder akustische Endgeräte, auf. Dabei wird über eine Datenbank aus dem Speichermodul 10 und dem Directory-Server 9 ein fachliches Layout entsprechend den seitens des Stationsservers 3' erhaltenen Informationen aufbereitet. Dabei entsteht seitens des standardisierten Endgeräte-Adapters ein virtuelles Abbild 13 des Endgerätes 2, welches über die standardisierte Endgeräte-Schnittstelle SES an den Endgeräte-Controller EC weitergeben wird. Der Endgeräte-Controller EC nimmt das fachliche Layout als virtuelles Abbild in Form eines Datensatzes an der standardisierten Endgeräte-Schnittstelle SES entgegen und bereitet dieses für das vorhandene Endgerät 2 spezifisch auf, wie nachfolgend anhand von Fig. 7a und 7b anhand von optischen Informationsanlagen erläutert.

Das Endgerät 2 wird aus logischer Sicht hierarchisch unterteilt in ein Display mit einer oder mehrerer Pages mit je einer oder mehrerer Regionen mit unterschiedlichen Eigenschaften. Ein Endgerät 2 wird dadurch beschrieben, daß es ein oder mehrere Pages enthalten kann. Diese Pages können unabhängig voneinander beschrieben werden. Über die standardisierte Endgeräteschnittstelle SES kann eine beliebige Page zur aktuell auf dem Display angezeigten Page werden. Jede Page kann eine oder mehrere Regionen enthalten. In Abhängigkeit der physikalischen Möglichkeiten kann die Region in ihren Dimensionen vorab über die standardisierte Endgeräteschnittstelle definiert werden. Dabei hat jede Region unterschiedliche Eigenschaften. So ist beispielsweise bei einem Palettenanzeiger eine Region durch eine Palette mit unterschiedlichen Fallblättern definiert. Daher kann die Region lediglich Codes enthalten, die auf dem physikalischen Endgerät 2 einem Fallblatt zugeordnet sind. Auf einem hochauflösenden Grafikdisplay kann eine Region beispielsweise die folgenden Eigenschaften haben: Codes, Zeichenkette, Bitmap und Video bzw. Movie. Codes werden dabei im Endgeräte-Controller EC durch ein dort vorgehaltenen Inhalt ersetzt, Zeichenketten mit Formatanweisungen wie Schrifttyp, Schriftgröße, Schriftfarbe und Schriftattribute, die seitens des Endgeräte-Controllers EC in entsprechende Grafiken umgewandelt werden. Bipmaps können seitens des Endgeräte-Controllers EC direkt übernommen werden und auf der entsprechenden Region des Endgerätes 2 zur Anzeige gebracht werden. Sofern das Endgerät 2 die Anzeige von bewegten Grafiken unterstützt, können auch diese direkt angezeigt werden. Dafür weist das Endgerät 2 Regionen vom Typ Video bzw. Movie auf. Für den Typ Video erhält der Endgeräte-Controller über die standardisierte Endgeräte-Schnittstelle einen kontinuierlichen Datenstrom, der Bewegtbilder entsprechend dem H.323-Format codiert, beispielsweise nach H.26x. Der Typ Movie ist eine Unterfunktion des Typs Video, wobei hier der Datenstrom seitens des Endgeräte-Controllers 2 bereits in Form einer Datei vorhanden ist. Dadurch wird der Datenstrom auf der standardisierten Endgeräte-Schnittstelle SES reduziert, da die Bewegtbilder nur einmal übertragen werden müssen, was nicht unter Echtzeitbedingungen erfolgen muß.

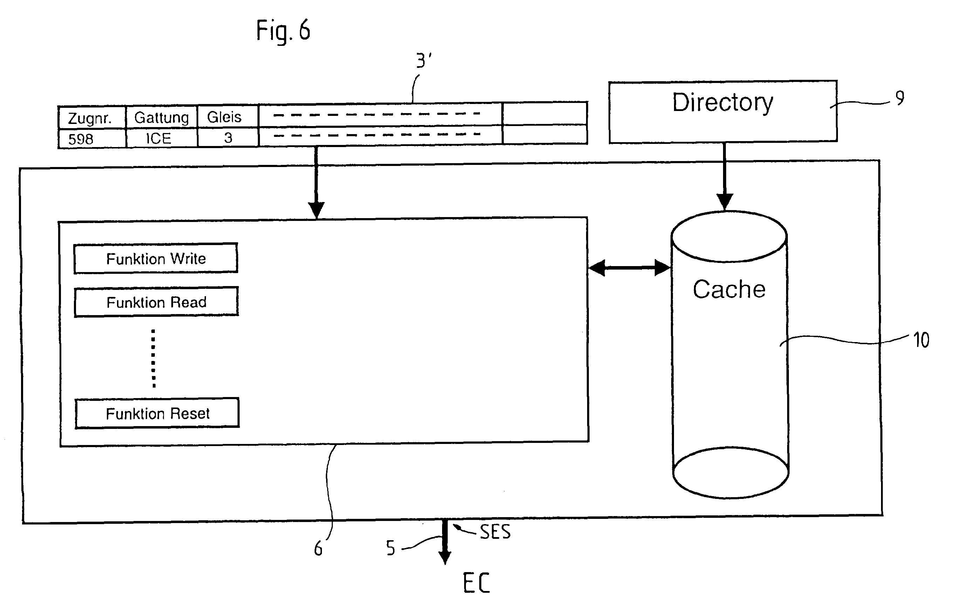

Fig. 6 zeigt die Verarbeitungslogik 6 des standardisierten Endgeräte-Adapters SEA, der die Aufgabe hat, aus einem seitens des Stationsservers 3' bereitgestellten logischen Datensatz, hier in Form einer Zugzeile, entsprechend der jeweiligen Endgeräteklasse die Informationen des Datensatzes zu extrahieren. Diese werden auf Basis des fachlichen Layouts aufbereitet und in die dafür vorgesehenen Regionen des Endgerätes 2 übertragen. Dafür werden die einzelnen Felder der Datensätze mit einem Interpreter umgesetzt. Dabei wird über eine Sequenz von Standardbefehlen für jedes Feldelement der Datensätze der Feldinhalt aufbereitet und in das logische bzw. virtuelle Abbild 13 des Endgerätes 2 übertragen. Die dabei verwendete Datenbank ist auf Basis des Directory-Servers 9, einem X.500-Server bzw. einem LDAP-Server realisiert. Der Directory-Server 9 erlaubt eine zentrale Datenhaltung für sämtliche Endgeräte 2. Zur Vermeidung unnötiger Kommunikation zwischen dem Directroy-Server 9 und den Endgeräten 2 werden die Steuerbefehle in dem Speicher-Modul 10, dem Cache des standardisierten Endgeräte-Adapters SEA zwischengespeichert.

Fig. 7a und 7b zeigen die prinzipielle Funktionalität des Endgeräte-Controllers EC zur Ansteuerung von Endgeräten 2. In Abhängigkeit der physikalischen Möglichkeiten des Endgerätes 2 werden die Informationen aus dem virtuellen Abbild 13 des Endgerätes 2 an den Endgeräte-Controller EC über die standardisierte Endgeräte-Schnittstelle SES übergeben. Für den in Fig. 7a dargestellten Fallblattanzeiger weist die Verarbeitungslogik 6 des standardisierten Endgeräte-Adapters SEA eine Tabelle mit den Bedruckungen der einzelnen Fallblätter auf. Je nach Inhalt der Region wird die entsprechende Fallblattnummer ermittelt und als Code-Nummer der Region an den Endgeräte-Controller übertragen. Die Speicherung der Daten erfolgt dabei, wie bereits erläutert, über den Directory-Server 9 und das Speicher-Modul 10 (Cache). Bei dem in Fig. 7b dargestellten Endgerät 2, einem hochauflösende Grafiken anzeigfähigem Monitor, wird durch den standardisierten Endgeräte-Adapter SEA aus dem Feldinhalt des virtuellen Abbildes 13 entweder eine Bitmap erzeugt oder ein reiner Text als Zeichenkette, die an den Endgeräte-Controller EC über die standardiserte Endgeräte-Schnittstelle SES übertragen wird. Für bestimmte Feldinhalte/Regionen kann für die einzelnen Werte in der aus Directory-Server 9 und Speicher-Modul 10 bereitgestellten Datenbank ebenso eine Bitmap vorgegeben werden. Beispielsweise für Logos von Transporteuren.

Der Endgeräte-Controller EC erhält über die standardisierte Endgeräte-Schnittstelle SES die für die unterschiedlichen physikalisch ähnlichen Endgeräteklassen aufbereiteten Daten. Diese Daten werden durch den Endgeräte-Controller für das jeweilige spezifische Endgerät aufbereitet und dargestellt. Für den in Fig. 7a dargestellten Fallblattanzeiger heißt das, daß die Code-Nummern einzelner Regionen in Stellbefehle für Schrittmotoren in den Fallblatt-Paletten umgesetzt werden. Dabei entspricht die Code-Nummer einer Fallblattposition innerhalb der Palette. Bei dem hochauflösende Grafiken darstellfähigem Monitor gemäß Fig. 7b können für jede Region für im Endgeräte-Controller EC fest hinterlegte Inhalte Code-Nummern, Zeichenketten oder Bitmaps übergeben werden. Zusätzlich kann auch ein kontinuierlicher Datenstrom seitens des Stationsservers 3' über die standardisierte Endgeräte-Schnittstelle SES angeliefert werden, welcher seitens des Endgeräte-Controllers EC als Videodaten interpretierbar ist, entsprechend einer H.26x-Kodierung. Dadurch ist die Einblendung von bewegter Werbung in einem Zuganzeiger oder einem sonstigen Monitor gegeben.

Bei hier nicht dargestellten akustischen Endgeräten 2 wird der kontinuierliche Datenstrom eine nach G. 7xx im Rahmen des H.323-Formates kodierte akustische Information. Die Regionen werden dabei seitens des Endgeräte-Controllers als Elemente einer synthetischen Ansage interpretiert, so daß eine beliebige Ansage aus vorab gespeicherten Sprachelementen zusammengesetzt werden kann.

### Bezugszeichenliste

- 1: Ansteuervorrichtung
- 2: Endgerät
- 3: Steuereinrichtung

- 3': Stationsserver
- 4: Kommunikationsverbindung
- 5: Kommunikationsnetzwerk
- 6: Verarbeitungslogik SEA
- 7: Steuerung Verbindungsaufbau SEA (Call Controll)
- 8: Gatekeeper
- 9: Directory-Server
- 10: Speichermodul (Cache)
- 11: Kommunikationsverbindung
- 12: Verarbeitungslogik
- 13: virtuelles Abbild
- 14: Steuerung
- 15: Steuerung
- 16: Kommunikationsverbindung
- 17: Kommunikationsverbindung
- 18: Kommunikationsverbindung
- 19: Anwendung
- 20: Kommunikationsverbindung
- 21: Schnittstelle
- 22: Treiber
- 23: Bussystem
- 24: Treiber
- 25: Verarbeitungslogik EC
- 26: Ein-/Ausgänge
- 27: Verarbeitungslogik
- 28: Verarbeitungslogik
- 29: Treiber
- 30: Bussystem
- 31: Treiber

- EC: Endgeräte-Controller
- SEA: standardisierter Endgeräte-Adapter
- SES: standardisierte Endgeräte-Schnittstelle

## Patentansprüche

1. Verfahren zur einheitlichen Ansteuerung von Endgeräten, insbesondere von vorzugsweise im Bereich von Bahnhofsanlagen einsetzbaren optischen und/oder akustischen Informationsanlagen, umfassend Monitore, Kameras, Lautsprecher, Fallblattanzeiger, Sensorik- und/oder Aktorikelemente, und dergleichen, wobei seitens wenigstens einer Steuereinrichtung (3, 3') Endgeräte (2) hinsichtlich ihrer logischen Funktionalität mittels eines standardisierten Endgeräte-Adapters (SEA) in Endgeräteklassen zusammengefaßt, über eine standardisierte Endgeräteschnittstelle (SES) mit einem Endgeräte-Controller (EC) verbunden und von dem Endgeräte-Controller (EC) physikalisch angesteuert werden.

2. Verfahren nach Anspruch 1, dadurch gekennzeichnet, daß der standardisierte Endgeräte-Adapter (SEA) mit dem Endgeräte-Controller (EC) über die standardisierte Endgeräte-Schnittstelle (SES) bidirektional verbunden wird.

3. Verfahren nach Anspruch 1, dadurch gekennzeichnet, daß der standardisierte Endgeräte-Adapter (SEA) mit dem Endgeräte-Controller (EC) über die standardisierte Endgeräte-Schnittstelle (SES) unidirektional verbunden wird.

4. Verfahren nach einem der Ansprüche 1 bis 3, dadurch gekennzeichnet, daß zur Kommunikation zwischen dem standardisierten Endgeräte-Adapter (SEA) und der Steuereinrichtung (3, 3') ein zur Übertragung von Text-, Audio- und/oder Videodaten geeignetes Protokoll, vorzugsweise ein Multimedia-Kommunikations-Protokoll verwendet wird.

5. Verfahren nach Anspruch 4, dadurch gekennzeichnet, daß das Protokoll im H.323-Format, vorzugsweise unter Verwendung von TCP/IP, verwendet wird.

6. Verfahren nach einem der Ansprüche 1 bis 5, dadurch gekennzeichnet, daß zwischen dem standardisierten Endgeräte-Adapter (SEA) und dem Endgeräte-Controller (EC) über die standardisierte Endgeräte-Schnittstelle (SES) Textdaten übertragen werden.

7. Verfahren nach einem der Ansprüche 1 bis 5, dadurch gekennzeichnet, daß zwischen dem standardisierten Endgeräte-Adapter (SEA) und dem Endgeräte-Controller (EC) über die standardisierte Endgeräte-Schnittstelle (SES) Audiodaten übertragen werden.

8. Verfahren nach einem der Ansprüche 1 bis 5, dadurch gekennzeichnet, daß zwischen dem standardisierten Endgeräte-Adapter (SEA) und dem Endgeräte-Controller (EC) über die standardisierte Endgeräte-Schnittstelle (SES) Videodaten übertragen werden.

9. Verfahren nach einem der Ansprüche 6 bis 8, dadurch gekennzeichnet, daß die Daten codiert übertragen werden, vorzugsweise im G. 7xx-Format und im H. 26x-Format.

10. Verfahren nach einem der Ansprüche 1 bis 9, dadurch gekennzeichnet, daß seitens der Steuereinrichtung (3, 3') Zustandsinformationen der Endgeräte (2) erfaßbar sind.

11. Verfahren nach einem der Ansprüche 1 bis 10, dadurch gekennzeichnet, daß seitens der Steuereinrichtung (3, 3') Fernwartungsmaßnahmen einleitbar bzw. durchführbar sind.

12. Vorrichtung zur einheitlichen Ansteuerung von Endgeräten (2), insbesondere von vorzugsweise im Bereich von Bahnhofsanlagen einsetzbaren optischen und/oder akustischen Informationsanlagen, umfassend Monitore, Kameras, Lautsprecher, Fallblattanzeiger, Sensorik- und/oder Aktorikelemente, und dergleichen, bestehend aus einem Endgeräte-Controller (EC) zur physikalischen Steuerung unterschiedlicher Endgeräte (2) und einem standardisierten Endgeräte-Adapter (SEA) zur logischen Steuerung der Endgeräte (2) seitens wenigstens einer Steuereinrichtung (3, 3'), wobei der Endgeräte-Controller (EC) und der standardisierte Endgeräte-Adapter (SEA) über eine standardisierte Endgeräte-Schnittstelle (SES) miteinander verbunden sind.

13. Vorrichtung nach Anspruch 12, dadurch gekennzeichnet, daß der standardisierte Endgeräte-Adapter (SEA) und der Endgeräte-Controller (EC) bidirektional verbunden sind.

14. Vorrichtung nach Anspruch 12, dadurch gekennzeichnet, daß der standardisierte Endgeräte-Adapter (SEA) und der Endgeräte-Controller (EC) unidirektional verbunden sind.

15. Vorrichtung nach einem der Ansprüche 12 bis 14, dadurch gekennzeichnet, daß der Endgeräte-Controller (EC) und der standardisierte Endgeräte-Adapter (SEA) als voneinander räumlich getrennte Baugruppen ausgebildet sind.

16. Vorrichtung nach einem der Ansprüche 12 bis 14, dadurch gekennzeichnet, daß der Endgeräte-Controller (EC) und der standardisierte Endgeräte-Adapter (SEA) jeweils eine standardisierte Endgeräte-Schnittstelle (SES) aufweisen.

17. Vorrichtung nach einem der Ansprüche 12 bis 16, dadurch gekennzeichnet, daß die standardisierte Endgeräte-Schnittstelle (SES) als Interprozeß-Schnittstelle ausgebildet ist, vorzugsweise als Berkley Socket, welche über wenigstens eine Schnittstelle an ein Kommunikationsnetzwerk anbindbar ist, vorzugsweise über eine RS232, eine RS485, eine API, eine V. 24, ein Funk-LAN oder einen LON-Bus..

18. Vorrichtung nach Anspruch 17, dadurch gekennzeichnet, daß die Verkabelung der standardisierten Endgeräte-Schnittstelle (SES) Twisted Pair , vorzugsweise der Kategorie 5/6.
